# FASCICULE DE BREVET EUROPEEN

(11) **EP 2 581 261 B1**
(45) Date de publication et mention de la délivrance du brevet: **25.05.2016**
(21) Numéro de dépôt: 12188206.2
(22) Date de dépôt: 11.10.2012
(51) Int. Cl.: B60N 2/66, B61D 33/00, B60N 2/22

(54) **Siège passager pour véhicule ferroviaire de transport comportant un dispositif de réglage du support lombaire**
Passagiersitz für Transportschienenfahrzeug, der mit einer Reguliervorrichtung für die Lordosenstütze ausgestattet ist
Passenger seat for railway transport vehicle comprising a device for adjusting the lumbar support

(30) Priorité: 12.10.2011 FR 1159206
(43) Date de publication de la demande: 17.04.2013
(73) Titulaire: SNCF MOBILITES, 93200 Saint-Denis (FR)
(72) Inventeur: Perdriel, Philippe, 92170 VANVES (FR); Gallais, Cédric, 27950 SAINT MARCEL (FR)
(74) Mandataire: Gevers & Orès

(56) Documents cités:
- EP-A2- 1 970 245
- EP-B1- 1 712 410
- US-A- 3 572 829
- US-A- 5 609 394

## Description

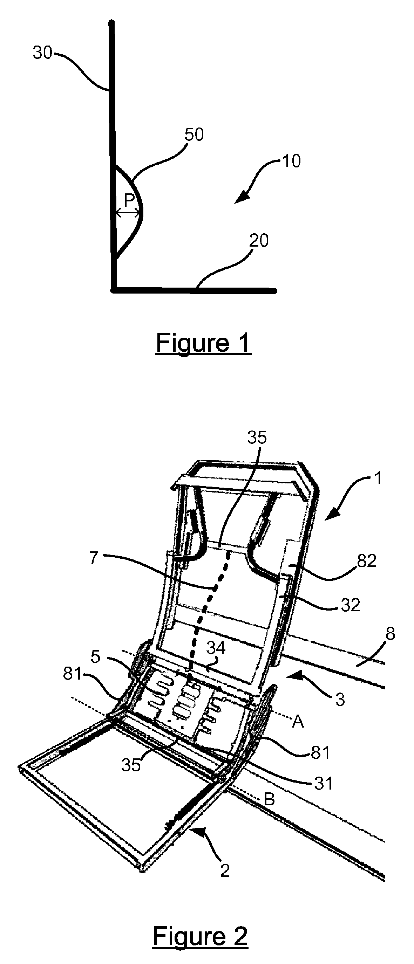

La présente invention concerne le domaine des sièges pour les passagers d'un véhicule ferroviaire de transport, en particulier, pour un véhicule ferroviaire du type TGV ® pour « train à grande vitesse ».
En référence à la figure 1, un siège passager comporte de manière classique une assise, 20 sensiblement horizontale, sur laquelle est articulé un dossier 30, sensiblement vertical, l'assise 20 et le dossier 30 étant tous les deux montés sur un châssis rigide de guidage formant l'ossature du siège. De manière connue, le siège 10 comporte un support lombaire 50 monté dans le dossier 30 qui permet d'améliorer la posture d'un passager en position assise. Le siège comporte de manière classique un dispositif de réglage du support lombaire 50 afin que la profondeur P du support lombaire 50, c'est-à-dire la distance entre le support lombaire 50 et le dossier 30, puisse être ajustée selon les désirs du passager afin d'améliorer son confort. Le dispositif de réglage comporte traditionnellement une manette de commande qui permet de régler la profondeur du support lombaire P. En pratique, la manette de commande est reliée à un câble de traction solidaire du support lombaire. Sous l'action du câble de traction, le support lombaire 50 se déforme ce qui modifie la profondeur du support lombaire P.
En pratique, le dispositif de réglage du support lombaire présente de nombreux inconvénients. Un premier inconvénient résulte du fait que la manette de commande du support lombaire est parfois ignorée par le passager (difficulté à localiser la manette de commande, difficulté à comprendre son fonctionnement, etc.) ce qui lui empêche de régler la profondeur du support lombaire de manière désirée. La posture du passager n'est alors pas optimale et le passager a la sensation que le siège n'est pas confortable ce qui porte préjudice à l'image de marque de la société de transport. Un deuxième inconvénient découle du fait qu'un passager peut avoir des difficultés à régler la profondeur lombaire lorsque le siège possède plusieurs positions, en particulier une position de repos et une position de travail, le passager devant adapter le support lombaire à chaque modification de la profondeur du siège. Enfin, un dispositif de réglage du support lombaire occupe un espace important dans le siège et possède un coût élevé ce qui présente également un inconvénient. Un siège comprenant un dispositif de réglage du support lombaire est décrit dans la demande de brevet EP1970245 A2 (correspondant au préambule de la revendication 1). Afin d'éliminer au moins certains de ces inconvénients, l'invention concerne un siège de passager pour véhicule de transport, notamment ferroviaire, comportant un châssis structural, une assise et un dossier articulé sur l'assise, l'assise et le dossier étant guidés par le châssis structural, le dossier comportant au moins une partie inférieure et une partie supérieure, des moyens d'articulation du dossier adaptés pour modifier l'angle formé entre la partie inférieure et la partie supérieure du dossier en fonction de la position de l'assise dans le châssis, un support lombaire monté sur la partie inférieure du dossier, et un dispositif de réglage de la profondeur du support lombaire configuré pour asservir la profondeur du support lombaire automatiquement en fonction de l'angle formé entre la partie inférieure et la partie supérieure du dossier.

Ainsi, il n'est pas nécessaire de prévoir des moyens de commande dédiés au réglage de la profondeur du support lombaire, celle-ci étant réglée automatiquement en fonction de l'avancée de l'assise pour que la profondeur du support lombaire soit optimale en toute position. On tire ainsi avantage de la courbure régulière du dossier du siège en position de repos pour commander la profondeur du support lombaire. La profondeur du support lombaire est asservie indirectement à l'avancé de l'assise. Cela est très avantageux car le dispositif de réglage peut être entièrement intégré au dossier sans impacter l'assise du siège. En outre, un réglage indirect permet d'augmenter la précision du réglage de la profondeur du support lombaire étant donné que le réglage est adapté à la courbure du dossier du siège. Un tel réglage est avantageux par comparaison à un réglage qui serait fonction de l'avancée de l'assise. En effet, l'avancée de l'assise n'est pas nécessairement proportionnelle à l'angle formé entre la partie inférieure et la partie supérieure du dossier ce qui empêche d'adapter de manière précise le support lombaire à la courbure du dossier.

De manière incidente, un tel réglage est avantageux lorsque la partie inférieure et la partie supérieure du dossier sont guidées dans le châssis du siège, en particulier, lorsque l'inclinaison de la partie inférieure du dossier est guidée.

De préférence, la profondeur du support lombaire est proportionnelle à l'angle formé entre la partie inférieure et la partie supérieure du dossier.

De manière préférée, le support lombaire se présentant sous la forme d'un élément souple déformable, le dispositif de réglage comporte des moyens de traction adaptés pour modifier la profondeur du support lombaire en fonction de la force de traction appliquée à l'élément souple déformable par les moyens de traction. Les moyens de traction permettent d'ajuster avec précision la profondeur du support lombaire ce qui permet d'améliorer le confort du passager.

De préférence, les moyens de traction sont montés entre l'élément souple déformable et la partie supérieure du dossier de manière à ce qu'une modification de l'angle formé entre la partie inférieure et la partie supérieure du dossier entraîne une modification de la force de traction.

De préférence encore, les moyens de traction se présentent sous la forme d'un câble de traction. Un tel câble de commande possède un faible coût de fabrication et est simple à monter dans un siège.

De manière préférée, la partie inférieure et la partie supérieure du dossier sont guidées sur le châssis. Ainsi, le déplacement des parties du dossier est précis ce qui garantit une force de traction calibrée et une profondeur du support lombaire optimale.

De préférence, la partie inférieure du dossier est guidée par au moins deux rainures formées dans le châssis structural de manière à guider le déplacement de la partie inférieure en fonction de l'avancée de l'assise.

De préférence encore, lesdites deux rainures du châssis structural sont inclinées l'une par rapport à l'autre de manière à guider l'inclinaison de la partie inférieure en fonction de l'avancée de l'assise.

L'invention sera mieux comprise à la lecture de la description qui va suivre, donnée uniquement à titre d'exemple, et se référant aux dessins annexés, des références identiques étant données à des objets semblables, sur lesquels :
- la figure 1 est une représentation schématique d'un siège comportant un support lombaire (déjà commentée) ;
- la figure 2 est une vue schématique de la structure d'un siège selon l'invention ;
- la figure 3A est une représentation schématique du siège en position de travail comportant un support lombaire en position sortie ; et
- la figure 3B est une représentation schématique du siège en position de repos comportant un support lombaire en position rentrée.

Il faut noter que les figures exposent l'invention de manière détaillée pour mettre en oeuvre l'invention, lesdites figures pouvant bien entendu servir à mieux définir l'invention le cas échéant.

Un siège 1 de passager pour véhicule ferroviaire selon l'invention est représenté de manière schématique sur la figure 2. Par souci de clarté, le revêtement du siège 1 (mousses, etc.) n'a pas été représenté de manière à ce que sa structure interne soit visible.

Le siège 1 comprend un châssis structural qui est solidaire du véhicule ferroviaire (non représenté). Dans cet exemple, le châssis structural comporte des traverses transversales 8 sur lesquelles peuvent être montés un ou deux sièges 1. Les traverses transversales 8 sont de préférence solidarisées entres elles et montées au plancher du véhicule ferroviaire via un pied de fixation (non représenté).

Le châssis structural comporte en outre un châssis supérieur 82, qui s'étend sensiblement verticalement et qui est fixé solidairement à une traverse supérieure 8, et un châssis inférieur 81, qui s'étend obliquement et qui est fixé solidairement à une traverse inférieure 8 comme représenté sur la figure 2.

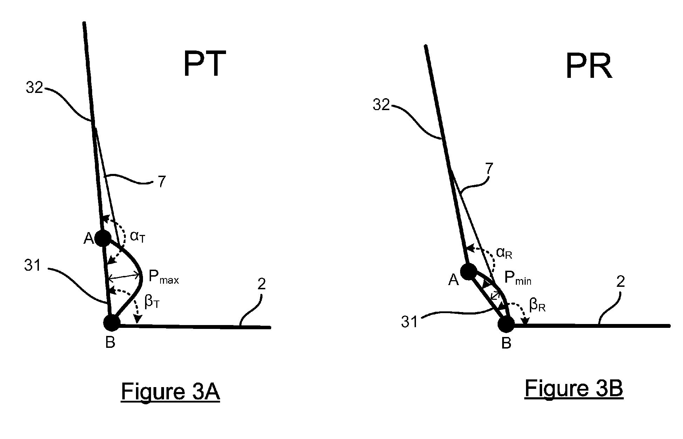

Toujours en référence à la figure 2, le siège 1 comprend une assise 2 s'étendant sensiblement horizontalement et un dossier 3 articulé sur l'assise 2 autour d'un axe B, le dossier 3 s'étendant sensiblement verticalement pour permettre de supporter le dos d'un passager assis sur l'assise 2. L'assise 2 est guidée dans le châssis inférieur 81 de manière à pouvoir se translater horizontalement. Par la suite, en référence aux figures 3A et 3B, on définit l'angle d'inclinaison β du dossier 3 comme l'angle formé entre une partie inférieure du dossier 3 et l'assise 2 autour de l'axe B.

Le siège 1 permet de définir au moins une position de repos PR dans laquelle le dossier 3 est incliné par rapport à la direction verticale comme représenté sur la figure 3B, l'angle d'inclinaison β du dossier 3 étant de l'ordre de 125°. La position de repos PR permet au passager d'allonger son corps pour se reposer. En effet, la position de repos PR permet de se rapprocher de la position couchée tout en limitant l'encombrement du siège 1 dans la direction horizontale de manière à ne pas diminuer le pas de siège dans le véhicule ferroviaire.

Le siège 1 permet de définir au moins une position de travail PT dans laquelle l'assise 2 est reculée et le dossier 3 est relevé, proche de la direction verticale, comme représentée sur la figure 3A, l'angle d'inclinaison β du dossier 3 étant de l'ordre de 110°. La position de travail PT permet d'assurer une posture adaptée pour le passager lorsque celui-ci est en train, par exemple, de lire ou d'utiliser un ordinateur portable ou une tablette.

Afin de permettre une posture adaptée au repos du passager tout en conservant un pas de siège de valeur réduite, le dossier 3 comporte une partie supérieure 32 et une partie inférieure 31 qui sont articulées entre elles de manière à limiter l'avancée de l'assise 2. L'angle d'inclinaison β du dossier 3 correspond alors à l'angle formé entre la partie inférieure 31 du dossier 3 et l'assise 2 autour de l'axe B.

L'invention est ici présentée avec un dossier en deux parties mais il va de soi qu'il pourrait en comprendre plus de deux, par exemple, trois.

En référence à la figure 2, la partie supérieure 32 du dossier 3 se présente sous la forme d'un cadre de forme rectangulaire et sensiblement incurvé de manière à épouser la forme du dos du passager. La partie supérieure 32 du dossier 3 est montée sur le châssis supérieur 82 du siège 1. La partie inférieure 31 du dossier 3 se présente également sous la forme d'un cadre de forme rectangulaire dont les dimensions sont réduites par comparaison à celles de la partie supérieure 32 comme représenté à la figure 2.

Dans cet exemple, en référence à la figure 2, les parties inférieure 31 et supérieure 32 du dossier 3 sont articulées autour d'un axe A se présentant sous la forme de languettes articulées montées latéralement au siège 1. Par la suite, on désignera α l'angle formé entre la partie inférieure 31 et la partie supérieure 32 du dossier 3 et dont le centre est défini sur l'axe A. Pour rappel, la partie inférieure 31 du dossier 3 est articulée sur l'assise 2 autour de l'axe B de manière à autoriser l'inclinaison du dossier 3.
Afin que l'angle d'inclinaison β du dossier 3 soit réglée de manière précise pour permettre un confort optimal du passager, la partie inférieure 31 du dossier 3 est guidée dans le châssis inférieur 81 comme représenté en détails sur les figures 2 et 3A-3B. Dans cet exemple, le châssis inférieur 81 comporte deux supports qui s'étendent latéralement et extérieurement à la partie inférieure 31 du dossier 3. Chaque support comprend des rainures de guidage rectilignes qui permettent de guider la partie inférieure 31 du dossier 3 ainsi que l'assise 2. De préférence, la partie inférieure 31 et la partie supérieure 32 du dossier 3 comportent des doigts de guidage adaptées pour coopérer avec les rainures de guidage. Les rainures de guidage du châssis inférieur 81 sont inclinées l'une par rapport à l'autre de manière à permettre une inclinaison de la partie inférieure 31 du dossier 3. Il va de soi que le guidage de la partie inférieure 31 du dossier 3 pourrait être différente.
Selon l'invention, le siège 1 comporte un support lombaire 5 monté entre deux barres transversales 33, 34 de la partie inférieure 31 du dossier 3 comme représenté sur la figure 2. Le support lombaire 5 se présente dans cet exemple sous la forme d'un élément souple déformable, de préférence, métallique. Un tel support lombaire 5 est connu en soi de l'homme du métier et ne sera pas détaillé plus en avant. Dans cet exemple, le support lombaire 5 est monté sur deux rails verticaux s'étendant entre les barres transversales 33, 34 de la partie inférieure 31 du dossier 3.
Le siège 1 comporte en outre un dispositif de réglage de la profondeur P du support lombaire 5 adapté pour modifier la courbure du support lombaire 5 de manière à ce que ce dernier soit plus ou moins en saillie depuis le dossier 3 du siège 1.
Par la suite, on définit une profondeur lombaire minimale Pₘᵢₙ dans laquelle le support lombaire 5 est rentré dans le dossier 3. Autrement dit, le support lombaire 5 s'étend sensiblement dans le plan de la partie inférieure 31 du dossier 3 lorsqu'il est en position minimale Pₘᵢₙ comme représenté sur la figure 3B. De manière similaire, on définit une profondeur lombaire maximale Pₘₐₓ dans laquelle le support lombaire 5 est saillant. Autrement dit, le support lombaire 5 s'étend sensiblement orthogonalement au plan défini par la partie inférieure 31 du dossier 3 lorsqu'il est en position maximale Pₘₐₓ comme représenté à la figure 3A.

Le dispositif de réglage de la profondeur lombaire P comporte des moyens de traction 7 reliés au support lombaire 5 de manière à modifier la profondeur lombaire P en fonction de la tension de traction. Le support lombaire 5 étant déformable, l'application d'une force de traction sur le support lombaire 5 entraîne une modification de sa courbure et donc de la profondeur lombaire P.

Dans cet exemple, les moyens de traction 7 se présentent sous la forme d'un câble de commande 7 reliant le support lombaire 5 à la partie supérieure 32 du dossier 3. De manière plus précise, en référence à la figure 2, une première extrémité du câble 7 est reliée au support lombaire 5 tandis que sa deuxième extrémité est reliée à une barre transversale 35 de la partie supérieure 32 du dossier 3. Il va de soi que la deuxième extrémité pourrait être reliée à d'autres éléments de la partie supérieure 32 du dossier 3.

De manière avantageuse, le dispositif de réglage ne comporte aucun moyen de commande de la traction du câble 7 pour régler la profondeur du support lombaire 5. Selon l'invention, la profondeur P du support lombaire 5 est asservie à l'angle α formé entre la partie inférieure 31 et la partie supérieure 32 du dossier 3 et dont le centre est défini sur l'axe A ce qui permet d'intégrer le support lombaire 5 et son dispositif de réglage directement dans le dossier 3 du siège.

Grâce à l'invention, la profondeur lombaire est maximale Pₘₐₓ lorsque le siège 1 est en position de travail PT et minimale Pₘᵢₙ lorsque le siège 1 est en position de repos PR comme représenté sur les figures 3A et 3B.

De manière avantageuse, les deux supports du châssis inférieur 81 permettent régler l'inclinaison de la partie inférieure 31 du dossier 3 en fonction de l'avancée de l'assise 2 reliée à la partie inférieure du dossier 31 par une articulation pivot d'axe B. Ainsi, comme l'angle α formé entre la partie inférieure 31 et la partie supérieure 32 du dossier 3 est asservi à l'avancée de l'assise 2, la profondeur P du support lombaire 5 est asservie indirectement à l'avancée de l'assise 2. Cela est avantageux étant donné que le dispositif de réglage de la profondeur P du support lombaire 5 est uniquement intégré au dossier 3.

Lors du passage du siège 1 entre ses positions de repos PR et de travail PT, l'angle α formé entre la partie supérieure 32 et la partie inférieure 31 du dossier 3 varie de manière à ce que la courbure du siège soit régulière en position de repos PR comme représenté sur la figure 3B. Il en résulte que la distance entre les extrémités du câble 7 varie en fonction de l'angle d'inclinaison α ce qui entraîne une modification de la tension du câble 7 et donc de la profondeur P du support lombaire 5.

De manière avantageuse, le passager ne doit pas régler la profondeur P du support lombaire 5 pour chaque position du siège 1. Le réglage est automatique. Il n'est ainsi pas nécessaire de prévoir des moyens de commande dédiés pour le réglage lombaire dans le siège 1, la profondeur lombaire P étant asservie à la position du siège 1. Par connaissance, d'une part, de la plage de variation de la longueur du câble 7 entre les positions de travail PT et de repos PR et, d'autre part, de la plage de variation de la profondeur lombaire P, on peut régler la tension du câble 7 lors du montage de manière à ce que la profondeur lombaire P soit définie de manière optimale en fonction de l'inclinaison β du dossier 3.

La manipulation du siège 1 entre ses différentes positions va être maintenant présentée en référence aux figures 3A et 3B.

En référence à la figure 3A, lorsque le siège est en position de travail PT, l'angle β_{T} du dossier 3 est faible de manière à ce que la posture du passager soit confortable, par exemple, pour lire un livre. L'angle α_{T} formé entre la partie inférieure 31 et la partie supérieure 32 du dossier 3 est sensiblement égal à 180°, le câble 7 étant tendu ce qui a pour conséquence de courber le support lombaire 5 qui est position sortie dans le dossier 3 comme représenté à la figure 3A, la profondeur lombaire P étant maximale.

Pour modifier l'inclinaison du dossier 3, le passager commande classiquement des vérins pneumatiques, par exemple au moyen d'un bouton installé dans un accoudoir du siège 1. De manière préférée, les vérins pneumatiques ne sont pas commandés par le passager mais dimensionnés pour faciliter le passage du siège de la position de repos PR à la position de travail PT, les vérins fournissant une aide passive.

Au fur et à mesure de l'allongement des vérins, l'assise 2 se déplace horizontalement et entraîne la partie inférieure 31 du dossier 3 par sa liaison articulée autour de l'axe B. En référence à la figure 3B, l'angle α formé entre la partie inférieure 31 et la partie supérieure 32 du dossier 3 diminue du fait de la rotation de la partie inférieure 31 du dossier 3 autour de l'axe A. En position de repos, l'angle d'inclinaison des parties 31, 32 du dossier 3 α_{R} et la profondeur P du support lombaire 5 sont minimales alors que l'angle d'inclinaison β_{R} du dossier 3 est maximal.

Il en résulte que le câble 7 se détend ce qui a pour conséquence de diminuer la profondeur P du support lombaire 5. Autrement dit, la profondeur du support lombaire P est inversement proportionnelle à l'angle d'inclinaison β du siège 1 mais proportionnelle à l'angle α formé entre la partie inférieure 31 et la partie supérieure 32 du dossier 3.

## Revendications

1. Siège (1) de passager pour véhicule de transport, notamment ferroviaire, comportant un châssis structural, une assise (2) et un dossier (3) articulé sur l'assise (2), l'assise (2) et le dossier (3) étant guidés par le châssis structural, le dossier (3) comportant au moins une partie inférieure (31) et une partie supérieure (32), des moyens d'articulation du dossier (3) adaptés pour modifier l'angle (α) formé entre la partie inférieure (31) et la partie supérieure (32) du dossier (3) en fonction de la position de l'assise (2) dans le châssis, un support lombaire (5) monté sur la partie inférieure (31) du dossier (3), et un dispositif de réglage de la profondeur du support lombaire (5),
**caractérisé en ce que** le dispositif de réglage de la profondeur du support lombaire (5) est configuré pour asservir la profondeur (P) du support lombaire (5) automatiquement en fonction de l'angle (α) formé entre la partie inférieure (31) et la partie supérieure (32) du dossier (3).

2. Siège selon la revendication 1, dans lequel la profondeur (P) du support lombaire (5) est proportionnelle à l'angle (α) formé entre la partie inférieure (31) et la partie supérieure (32) du dossier (3).

3. Siège selon l'une des revendications 1 à 2, dans lequel, le support lombaire (5) se présentant sous la forme d'un élément souple déformable, le dispositif de réglage comporte des moyens de traction (7) adaptés pour modifier la profondeur (P) du support lombaire en fonction de la force de traction appliquée à l'élément souple déformable par les moyens de traction (7).

4. Siège selon la revendication 3, dans lequel, les moyens de traction (7) sont montés entre l'élément souple déformable et la partie supérieure (32) du dossier (3).

5. Siège selon l'une des revendications 3 à 4, dans lequel les moyens de traction (7) se présentent sous la forme d'un câble de traction.

6. Siège selon l'une des revendications 1 à 5, dans lequel la partie inférieure (31) et la partie supérieure (32) du dossier (3) sont guidées sur le châssis (8).

7. Siège selon l'une des revendications 1 à 6, dans lequel la partie inférieure (31) du dossier (3) est guidée par au moins deux rainures formées dans le châssis structural.

8. Siège selon la revendication 7, dans lequel lesdites deux rainures du châssis structural sont inclinées l'une par rapport à l'autre.

## Patentansprüche

1. Passagiersitz (1) für ein Transportfahrzeug, insbesondere eine Eisenbahn, umfassend ein Strukturgestell, eine Sitzfläche (2) und eine Lehne (3), die durch ein Gelenk mit der Sitzfläche (2) verbunden ist, wobei die Sitzfläche (2) und die Lehne (3) durch die Gestellstruktur geführt werden, wobei die Lehne (3) umfasst: mindestens einen unteren Abschnitt (31) und einen oberen Abschnitt (32), Gelenkmittel der Lehne (3), die geeignet sind, den Winkel (α), der zwischen dem unteren Abschnitt (31) und dem oberen Abschnitt (32) der Lehne (3) gebildet wird, entsprechend der Position der Sitzfläche (2) im Gestell zu modifizieren, eine Lendenstütze (5), die am unteren Abschnitt (31) der Lehne (3) montiert ist, und eine Regelungsvorrichtung der Tiefe der Lendenstütze (5),
**dadurch gekennzeichnet, dass** die Regelungsvorrichtung der Tiefe der Lendenstütze (5) ausgelegt ist, die Tiefe (P) der Lendenstütze (5) automatisch entsprechend dem Winkel (α), der zwischen dem unteren Abschnitt (31) und dem oberen Abschnitt (32) der Lehne (3) gebildet wird, einzustellen.

2. Sitz nach Anspruch 1, wobei die Tiefe (P) der Lendenstütze (5) proportional ist zum Winkel (α), der zwischen dem unteren Abschnitt (31) und dem oberen Abschnitt (32) der Lehne (3) gebildet wird.

3. Sitz nach einem der Ansprüche 1 bis 2, wobei die Lendenstütze (5) in der Form eines beweglichen verformbaren Elements präsentiert wird, wobei die Regelungsvorrichtung Zugmittel (7) umfasst, welche geeignet sind, die Tiefe (P) der Lendenstütze entsprechend der Zugkraft zu modifizieren, die auf das bewegliche verformbare Element durch die Zugmittel (7) ausgeübt wird.

4. Sitz nach Anspruch 3, wobei die Zugmittel (7) zwischen dem beweglichen verformbaren Element und dem oberen Abschnitt (32) der Lehne (3) montiert sind.

5. Sitz nach einem der Ansprüche 3 bis 4, wobei die Zugmittel (7) in der Form eines Zugkabels präsentiert werden.

6. Sitz nach einem der Ansprüche 1 bis 5, wobei der untere Abschnitt (31) und der obere Abschnitt (32) der Lehne (3) auf dem Gestell (8) geführt werden.

7. Sitz nach einem der Ansprüche 1 bis 6, wobei der untere Abschnitt (31) der Lehne (3) durch mindestens zwei Rillen geführt wird, die im Strukturgestell gebildet sind.

8. Sitz nach Anspruch 7, wobei die beiden Rillen des Strukturgestells jeweils eine in Bezug auf die andere geneigt sind.

## Claims

1. Passenger seat (1) for a transport vehicle, in particular a railway transport vehicle, comprising a structural frame, a seat portion (2) and a backrest (3) articulated on the seat portion (2), the seat portion (2) and the backrest (3) being guided by the structural frame, the backrest (3) comprising at least one lower part (31) and one upper part (32), means for articulating the backrest (3) adapted to modify the angle (α) formed between the lower part (31) and the upper part (32) of the backrest (3) according to the position of the seat portion (2) in the frame, a lumbar support (5) mounted on the lower part (31) of the backrest (3), and a device for adjusting the depth of the lumbar support (5),
**characterised in that** the device for adjusting the depth of the lumbar support (5) is configured to automatically control the depth (P) of the lumbar support (5) according to the angle (α) formed between the lower part (31) and the upper part (32) of the backrest (3).

2. Seat according to claim 1, wherein the depth (P) of the lumbar support (5) is proportional to the angle (α) formed between the lower part (31) and the upper part (32) of the backrest (3).

3. Seat according to one of claims 1 to 2, wherein, the lumbar support (5) has the form of a deformable flexible element, the device for adjusting comprises means of traction (7) adapted to modify the depth (P) of the lumbar support according to the traction force applied to the deformable flexible element by the means of traction (7).

4. Seat according to claim 3, wherein the means of traction (7) are mounted between the deformable flexible element and the upper part (32) of the backrest (3).

5. Seat according to one of claims 3 to 4, wherein the means of traction (7) have the form of a traction cable.

6. Seat according to one of claims 1 to 5, wherein the lower part (31) and the upper part (32) of the backrest (3) are guided on the frame (8).

7. Seat according to one of claims 1 to 6, wherein the lower part (31) of the backrest (3) is guided by at least two grooves formed in the structural frame.

8. Seat according to claim 7, wherein said grooves of the structural frame are inclined with respect to one another.
